# EUROPÄISCHE PATENTSCHRIFT

(11) **EP 1 145 945 B1**
(45) Veröffentlichungstag und Bekanntmachung des Hinweises auf die Patenterteilung: **20.10.2004**
(21) Anmeldenummer: 01108238.5
(22) Anmeldetag: 31.03.2001
(51) Int. Cl.: B62K 5/04, B62J 35/00

(54) **Dreiradkraftwagen**
Three-wheel motor vehicle
Tricycle à moteur

(30) Priorität: 13.04.2000 DE 10018402; 21.08.2000 DE 20014513 U
(43) Veröffentlichungstag der Anmeldung: 17.10.2001
(73) Patentinhaber: Fischer, Josef, 79427 Eschbach (DE)
(72) Erfinder: Fischer, Josef, 79427 Eschbach (DE)
(74) Vertreter: Zimmermann, Günter, Dr.

(56) Entgegenhaltungen:
- DE-A- 3 027 072
- DE-U- 8 801 923
- FR-A- 2 582 610
- JP-A- 62 043 384
- US-A- 3 580 348
- US-A- 4 340 125
- US-A- 4 421 194
- US-A- 4 460 057
- US-A- 4 909 525
- US-A- 4 944 360
- PATENT ABSTRACTS OF JAPAN vol. 017, no. 639 (M-1515), 26. November 1993 (1993-11-26) & JP 05 201363 A (HONDA MOTOR CO LTD), 10. August 1993 (1993-08-10)

## Beschreibung

Die Erfindung bezieht sich auf einen Dreiradkraftwagen mit einem Rahmen, welcher aus einem Rahmenvorderteil, einem horizontal verlaufenden, im Querschnitt rechteckförmigen Rahmenmittelteil mit rahmenhinterteilseitigem Ende und einem Rahmenhinterteil besteht, wobei eine Antriebseinheit im Bereich des Rahmenhinterteils angeordnet ist und im Rahmenmittelteil ein Hohlkörper vorgesehen ist, welcher zur Kraftstoffaufnahme als Tank ausgebildet ist.

Ein Dreiradkraftwagen, auch "Trike" genannt, stellt eine Mischung zwischen einem Kraftfahrzeug und einem Motorrad dar. Der hintere Teil des Dreiradkraftwagens ist kraftfahrzeugähnlich aufgebaut und weist einen VW-Käfer-Motor auf, während der vordere Teil des Fahrzeuges dem Aufbau eines Motorrad ähnelt. Die Hinterräder sind kräftig ausgebildet und weisen Reifen mit sehr großem Querschnitt auf, während das Vorderrad einen kleinen Reifenquerschnitt aufweist und in einer Vorderradgabel wie bei einem Motorrad gelagert ist. Der gesamte Rahmen ist massiv ausgebildet. Dies führt nachteiligerweise dazu, daß der bekannte Dreiradkraftwagen sehr schwer ist.

Ein Dreiradkraftwagen gemäß dem Oberbegriff von Anspruch 1 ist durch das Gebrauchsmuster DE 88 01 923 U bekannt. Bei diesem bekannten Dreiradkraftwagen ist das Rahmenmittelteil als Hohlprofil ausgebildet und besteht aus zwei Sektionen. Eine Sektion bildet den Tank und die andere Sektion besteht aus einem offenen Profilteil, in dem eine Batterie aufgenommen ist. Am Heckrahmen ist der Motor angebracht. Durch die tiefliegende Tankanordnung wird zwar der Schwerpunkt des Trikes weiter in Richtung des Vorderrades verlagert und damit eine Fahrstabilität erreicht, jedoch liegt nachteiligerweise das Hauptgewicht immer noch auf den Hinterrädern.

Die Aufgabe der Erfindung besteht somit darin, den Dreiradkraftwagen der eingangs genannten Art derart weiterzuentwickeln, daß sein Gewicht reduziert wird.

Zur Lösung dieser Aufgabe wird erfindungsgemäß vorgeschlagen, daß bei dem Dreiradkraftwagen gemäß dem Oberbegriff des Anspruchs 1 das Rahmenmittelteilin der Draufsicht dreieckförmig oder trapezförmig ist, wobei sich der Tank etwa über den Gesamtbereich des Rahmenmittelteils erstreckt und das Rahmenhinterteil eine Aufhängung für die Antriebseinheit derart aufweist, daß die Antriebseinheit mit Motor und Getriebe zwischen einer Hinterachse und dem rahmenhinterteilseitigen Ende des Rahmenmittelteils angeordnet ist.

Da das Rahmenmittelteil vollständig als Hohlkörper ausgebildet ist, wird eine Gewichtsersparnis erreicht, wobei gleichzeitig die Rahmenstabilität erhalten bleibt. Der Hohlkörper kann auch eine Tankattrappe zur Aufnahme von Meßgeräten wie Drehzahlmesser oder dergleichen oder elektronischen Schalteinheiten sein.

Das Rahmenmittelteil ist im Querschnitt rechteckförmig und in der Draufsicht dreieckförmig oder trapezförmig ausgebildet. Die Basis der Dreiecksform schließt an das Rahmenhinterteil an, während die Spitze der Dreiecksform dem Rahmenvorderteil zugewandt ist. Hierdurch wird eine stabile und optisch ansprechende Rahmenkonstruktion erreicht.

Die Antriebseinheit ist zwischen der Hinterachse und dem rahmenhinterteilseitigen Ende des Rahmenmittelteils angeordnet. Durch diese Anordnung der Antriebseinheit wird der Schwerpunkt des Kraftradwagens weiter zur Mitte hin verschoben, so daß der Dreiradkraftwagen leichter gebaut werden kann. Bei dem bisher bekannten Dreiradkraftwagen war der VW-Motor hinter der Hinterachse angeordnet, wodurch es erforderlich war, die Rahmenteile insgesamt massiv auszuführen, damit der Schwerpunkt nicht zu weit hinten liegt.

Um die Antriebseinheit mit möglichst geringem Montageaufwand an den vorgefertigten Rahmen anzubauen, sieht eine Ausgestaltung der Erfindung vor, daß die Aufhängung aus einem ersten horizontal verlaufenden Trägerabschnitt und einem damit verbundenen zweiten bogenförmigen Trägerabschnitt besteht, welcher vom ersten Trägerabschnitt ausgehend bogenförmig nach oben verläuft und in einem dritten horizontal verlaufenden Trägerabschnitt endet. Es sind auch andere Ausgestaltungen der Aufhängung denkbar. So besteht bei einer weiteren Ausführungsform der Erfindung die Aufhängung aus einem ersten vertikal verlaufenden Trägerabschnitt, einem damit verbundenen zweiten Trägerabschnitt und einem dritten horizontal verlaufenden Trägerabschnitt.

Bei einer Weiterbildung der Erfindung weist die Antriebseinheit einen abgasarmen Motor mit automatisiertem sequentiellen 6 Gang Getriebe auf, wobei es sich bei dem Motor um einen 3-Zylinder Motor handelt. Dieser Motor in Verbindung mit der verbesserten Rahmenkonstruktion reduziert das Gesamtgewicht gegenüber der herkömmlichen Käfertechnik um etwa 30 %. Weiterhin wird der Benzinverbrauch gegenüber der herkömmlichen Technik um mehr als die Hälfte von durchschnittlich 11 Liter auf 4 Liter pro 100km gesenkt. Die Schaltung des Getriebes erfolgt vorteilhafterweise über eine Tiptronikschaltung, welche am Lenker angeordnet ist, wobei an einem Lenkerteil, beispielsweise dem linken Lenkerteil, der Schaltungsbereich für das Schalten der Gänge nach unten, und an dem anderen Lenkerteil, beispielsweise dem rechten Lenkerteil, der Schaltungsbereich für das Schalten der Gänge nach oben angeordnet ist. Durch die schwerpunktmäßige günstige Anordnung der Antriebseinheit und des Tanks ist ein massives Rahmenvorderteil nicht mehr notwendig, so daß zweckmässigerweise das Rahmenvorderteil als ein Rohrrahmen ausgebildet ist. Bei einem anderen Ausführungsbeispiel der Erfindung ist auf dem Rahmenhinterteil ein Zusatztank angeordnet, um den Aktionsradius des Dreiradkraftwagens ohne Nachtanken zu erhöhen. Es ist auch denkbar, den eigentlichen Tank auf dem Rahmenhinterteil anzuordnen.

Eine bevorzugte Ausführungsform der Erfindung sieht vor, daß im Rahmenhinterteil ein Kühler nahe dem rahmenhinterteilseitigen Ende des Rahmenmittelteils angeordnet ist. Bei dem Kühler handelt es sich um einen Wasserkühler. Um den Kühler in einfacher Weise zusammen mit der Antriebseinheit auszutauschen, sieht eine weitere Ausführungsform der Erfindung vor, daß der Kühler auf einem Y-Träger der Antriebseinheit angeordnet ist und sich quer zu einer Längsachse des Rahmens erstreckt. Vorteilhafterweise sind in einer Karosserie Lüftungsschlitze zur Kühlung des Kühlers vorgesehen. Als Stoßstange oder um die Stabilität des Rahmens zu erhöhen, ist ein Motorschutzbügel vorgesehen, welcher teilweise unter der Antriebseinheit verläuft und mit einem Ende an dem rahmenhinterteilseitigen Ende des Rahmenmittelteils befestigt ist.

Die Erfindung wird nachstehend anhand der Zeichnung näher erläutert. Die Zeichnung zeigt Ausführungsbeispiele der Erfindung. Hierbei stellen dar:
Fig.1 eine schematische Seitenansicht des erfindungsgemäßen Dreiradkraftwagens,
Fig.2 eine schematische Draufsicht auf den Rahmen,
Fig.3 eine Seitenansicht des Rahmens nach Fig.2 mit einer schematischen Darstellung des Einbaus der Antriebseinheit,
Fig.4 eine schematische Draufsicht nach Fig.3,
Fig.5 ein weiteres Ausführungsbeispiel der Erfindung,
Fig. 6 ein weiteres Ausführungsbeispiel der Erfindung in Seitenansicht und
Fig. 7 eine Draufsicht nach Fig. 6.

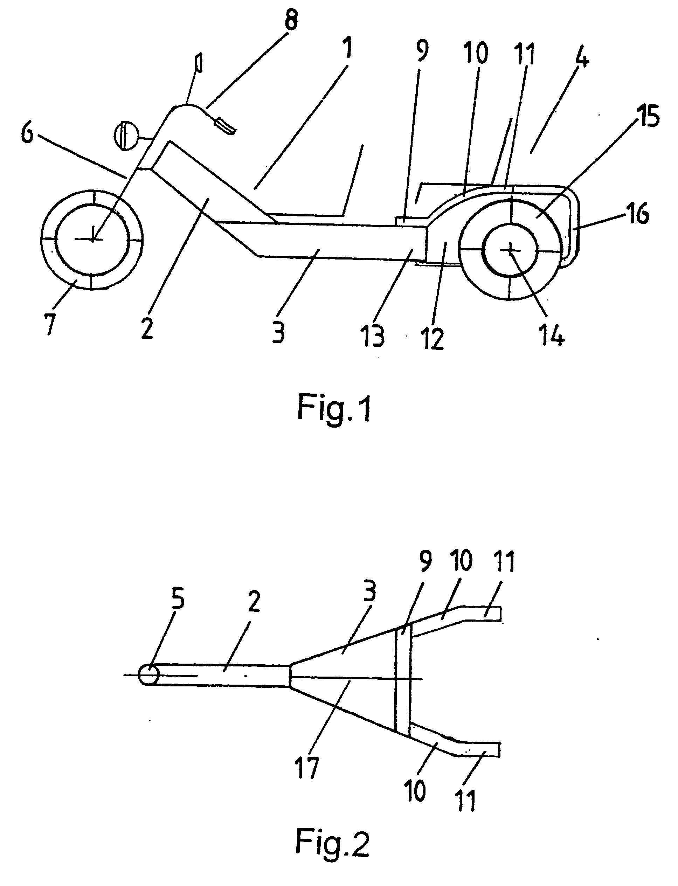

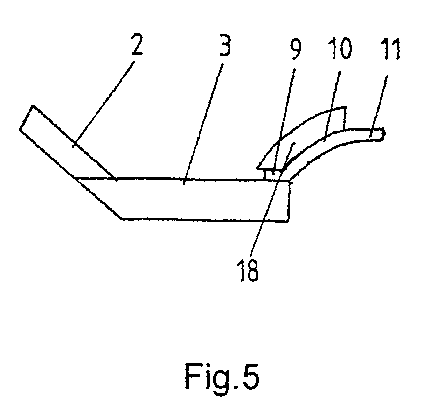

Der erfindungsgemäße Dreiradkraftwagen weist einen Rahmen 1 auf, welcher aus einem Rahmenvorderteil 2, einen horizontal verlaufenden Rahmenmittelteil 3 und einen Rahmenhinterteil 4 besteht. Das Rahmenvorderteil 2 besteht aus einem einstückig ausgebildeten Rohrrahmen, an welchem an einem Lenkkopf 5 eine Vorderradgabel 6 mit Vorderrad 7 und Lenker 8 angeordnet ist. Das Rahmenmittelteil 3 hat in Draufsicht eine etwa dreieckförmige oder trapezförmige Form und ist über seinen Gesamtbereich als Hohlkörper ausgebildet. Dieser Hohlkörper dient als Tank, wobei die Wände des Hohlkörpers verstärkt sind und eine Wandstärke von etwa 6 mm aufweisen. An das Rahmenmittelteil 3 schließt sich das Rahmenhinterteil 4 an, welches aus einem ersten horizontal verlaufenden Trägerabschnitt 9, einem zweiten bogenförmigen Trägerabschnitt 10 und einem dritten horizontal verlaufenden Trägerabschnitt 11 besteht. Das Rahmenhinterteil 4 dient als Aufhängung für eine in Fig.1 nicht näher dargestellte Antriebseinheit 12, welche zwischen einem rahmenhinterteilseiten Ende 13 des Rahmenmittelteils 3 und einer Hinterachse 14 für die beiden Hinterräder 15 angeordnet ist. An das Rahmenhinterteil 4 schließt sich ein Motorschutzbügel 16 an, welcher U-förmig ausgebildet ist und den dritten Trägerabschnitt 11 mit dem unteren hinterteilseitigen Ende 13 des Rahmenmittelteils 3 verbindet. Wie in Fig.2 dargestellt, ist der Trägerabschnitt 9 auf der Oberseite des rahmenhinterteilseitigen Endes 13 des Rahmenmittelteils 3 angebracht und erstreckt sich quer zu einer Längsachse 17 des Rahmens 1. An jedem Ende des Trägerabschnitts 9 schließt sich symmetrisch zur Längsachse 17 ein Trägerabschnitt 10 an. Jeder Trägerabschnitt 10 verläuft in einem Winkel von etwa 20 Grad zur Längsachse 17 nach hinten außen und in einem Winkel von etwa 30 Grad bis 45 Grad zur Längsebene bogenförmig mit immer geringer werdender Steigung nach oben. An jeden Trägerabschnitt 10 schließt sich parallel zur Längsachse 17 verlaufend der Trägerabschnitt 11 an. Bei dem in Fig.5 dargestellten weiteren Ausführungsbeispiel ist ein Zusatztank 18 auf dem Rahmenhinterteil 4 angeordnet. Der Zusatztank 18 erstreckt sich über den ersten Trägerabschnitt 9 und den zweiten Trägerabschnitt 10. Wenn ein Hohlkörper als Tank nicht vorgesehen ist, so kann der Zusatztank 18 als Tank verwendet werden.

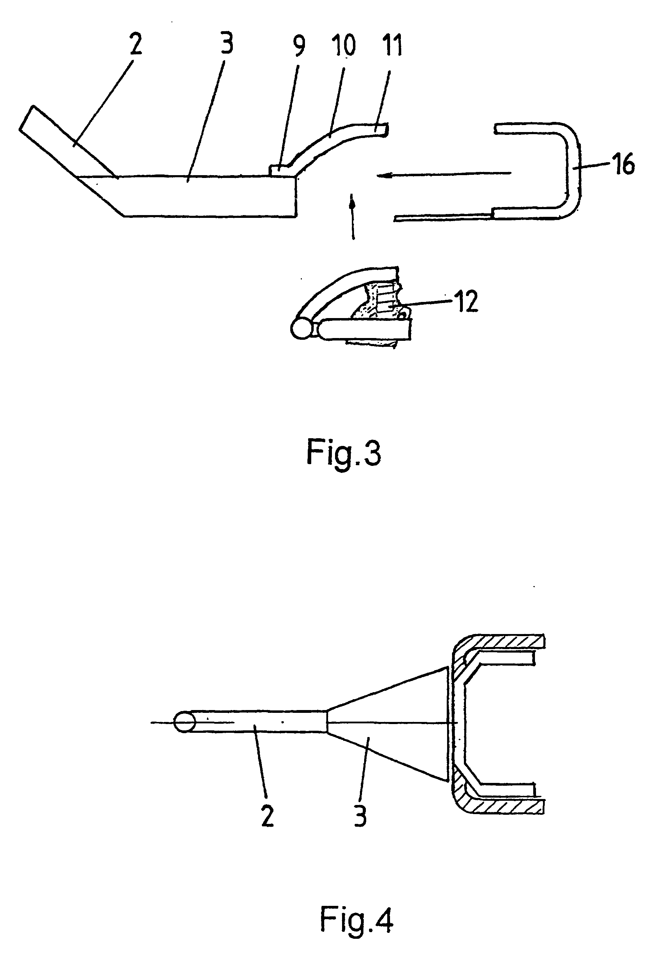

Durch die Tankanordnung im Rahmenmittelteil in Form des Hohlkörpers entfällt das bisher bei bekannten Dreiradkraftwagen verwendete separate Tankbauteil, so daß bei dem erfindungsgemäße Dreiradkraftwagen eine Gewichtsreduzierung erzielt wird. Durch die Anordnung der Antriebseinheit 12 vor der Hinterachse 14 wird der Schwerpunkt gegenüber herkömmlichen Dreiradkraftwagen weiter nach vorne verlagert, so daß das Rahmenvorderteil 2 nicht mehr massiv, sondern als Rohrrahmen ausgeführt wird. Hierdurch wird eine weitere Gewichtsreduzierung erzielt, ohne daß insgesamt die Stabilität des Rahmens 1 beeinträchtigt wird. Als Antriebseinheit 12 wird ein abgasarmer Motor mit 6-Gang-Getriebe verwendet. Gegenüber der herkömmlichen Technik ist das Gesamtgewicht des erfindungsgemäßen Dreiradkraftwagens um etwa 30 % und zusätzlich der Benzinverbrauch um mehr als die Hälfte von durchschnittlich 11 Liter auf 4 Liter reduziert. Wie in Fig.3 und 4 schematisch dargestellt, ist der Rahmen 1 so ausgelegt, daß die Antriebseinheit 12 in einfacher Weise eingebaut werden kann. Hierzu wird die Antriebseinheit 12 komplett mit der Achse, einem Y-Träger und einer Auspufflage in das Rahmenhinterteil 4 eingesetzt und mit dem Rahmen verschraubt. Anschließend wird der Motorschutzbügel 16 angebracht sowie die Hinterräder 15 und die Vorderradgabel 6 mit Vorderrad 7 und Lenker 8 montiert.

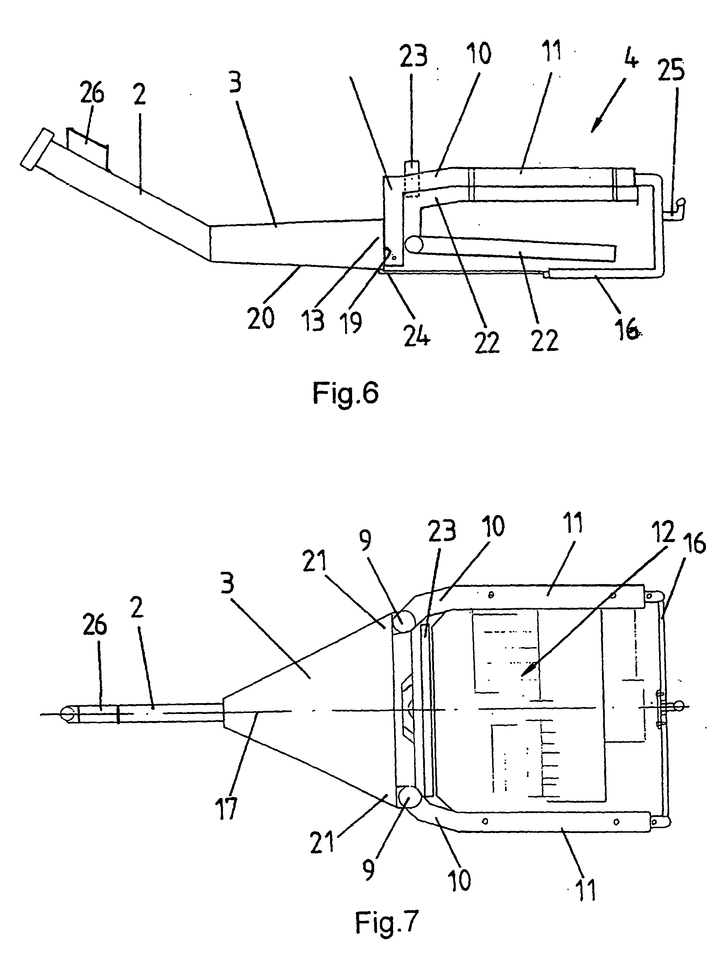

Bei dem in Fig.6 und Fig.7 dargestellten Ausführungsbeispiel ist der Trägerabschnitt 9 an einer Rückwand 19 des rahmenhinterteilseitigen Endes 13 des Rahmenmittelteils angebracht und erstreckt sich von einer Unterseite 20 des Rahmenmittelteils 3 ausgehend vertikal nach oben. Der Trägerabschnitt 9 ist etwa rohrförmig ausgebildet und ist etwa im Bereich der Basisecken 21 des dreieckförmigen Rahmenmittelteils 3 angeschweißt. An jeden Trägerabschnitt 9 schließt sich symmetrisch zur Längsachse 17 des Rahmens 1 der Trägerabschnitt 10 und danach der Trägerabschnitt 11 an. Die Trägerabschnitte 10 und 11 verlaufen etwa horizontal und bilden zusammen mit dem Trägerabschnitt 9 jeweils eine etwa rechtwinklige Aufhängung für die Antriebseinheit 12 auf jeder Seite symmetrisch zur Längsachse 17. Zum Einbau wird die Antriebseinheit 12 mit dem Y-Träger 22 in das Rahmenhinterteil 4 eingesetzt und im Bereich des Trägerabschnitts 11 verschraubt. Auf dem Y-Träger 22 sitzt ein Kühler 23 für den Motor. Der Kühler 23 ist nahe dem rahmenhinterteilseitigen Ende 13 des Rahmenmittelteils 3 auf dem Y-Träger angeordnet. Der Kühler 23 verläuft quer zu Längsachse 17 des Rahmens 1 und sitzt etwa zwischen den beiden Trägerabschnitten 10 der Aufhängung und vor der Antriebseinheit 12. Zur Kühlung des Kühlers 23 sind in einer Karosserie, welche in der Zeichnung nicht näher dargestellt ist und welche im Bereich des Rahmenmittelteils 3 und des Rahmenhinterteils 4 sitzt, Lüftungsschlitze vorgesehen. Die Lüftungsschlitze befinden sich seitlich neben einem Vordersitz der Karosserie. Durch die Lüftungsschlitze tritt der Fahrtwind ein und wird an den Kühler 23 weitergeleitet, so da dieser von vorne durch den Fahrtwind gekühlt wird. Der Motorschutzbügel 16 ist U-förmig ausgebildet und verbindet den dritten Trägerabschnitt 11 mit dem unteren rahmenhinterteilseitigen Ende 13 des Rahmenmittelteils 3, wobei das untere Ende 24 des Motorschutzbügels 16 im Bereich der Unterseite 20 des rahmenhinterteilseitigen Endes 13 befestigt ist. Durch diese Rückführung des Motorschutzbügels 16 unter der Antriebseinheit 12 zum Rahmenmittelteil 3 wird insgesamt die Stabilität des Rahmens erhöht. Weiterhin werden durch die Rückführung des Motorschutzbügels 16 unter der Antriebseinheit 12 Beschädigungen der Antriebseinheit 12 von der Unterseite her vermieden. Im hinteren Bereich des Motorschutzbügels 16 ist eine Anhängerkupplung 25 vorgesehen, welche vorteilhafterweise mit dem Motorschutzbügel 16 verschraubt wird. Der Motorschutzbügel 16 weist eine erhöhte Stabilität auf und ermöglicht somit eine schnelle, einfache und kostengünstige Anbringung der Anhängerkupplung 25. Weiterhin ist am Rahmenvorderteil 2 eine Tankattrappe 27 zur Aufnahme von Kombiinstrumente oder Meßinstrumenten wie Drehzahlmesser oder dergleichen oder elektronischen Schalteinheiten vorgesehen. Durch die Tankattrappe 27 werden die Instrumente spiegelfrei und spritzwassergeschützt aufgenommen.

## Patentansprüche

1. Dreiradkraftwagen mit einem Rahmen (1), welcher aus einem Rahmenvorderteil (2), einem horizontal verlaufenden, im Querschnitt rechteckförmigen Rahmenmittelteil (3) mit rahmenhinterteilseitigem Ende (13) und einem Rahmenhinterteil (4) besteht, wobei eine Antriebseinheit (12) im Bereich des Rahmenhinterteils (4) angeordnet ist und im Rahmenmittelteil (3) ein Hohlkörper vorgesehen ist, welcher zur Kraftstoffaufnahme als Tank ausgebildet ist,
**dadurch gekennzeichnet,**
**daß** das Rahmenmittelteil (3) in der Draufsicht dreieckförmig oder trapezförmig ist, wobei sich der Tank etwa über den Gesamtbereich des Rahmenmittelteils (3) erstreckt und das Rahmenhinterteil (4) eine Aufhängung für die Antriebseinheit (12) derart aufweist, daß die Antriebseinheit (12) mit Motor und Getriebe zwischen einer Hinterachse (14) und dem rahmenhinterteilseitigen Ende (13) des Rahmenmittelteils (3) angeordnet ist.

2. Dreiradkraftwagen nach Anspruch 1,
**dadurch gekennzeichnet,**
**daß** die Aufhängung aus einem ersten horizontal verlaufenden Trägerabschnitt (9) und einem damit verbundenen zweiten bogenförmigen Trägerabschnitt (10) besteht, welcher vom ersten Trägerabschnitt (9) ausgehend bogenförmig nach oben verläuft und in einem dritten horizontal verlaufenden Trägerabschnitt (11 ) endet.

3. Dreiradkraftwagen nach Anspruch 1,
**dadurch gekennzeichnet,**
**daß** die Aufhängung aus einem ersten vertikal verlaufenden Trägerabschnitt (9), einem damit verbundenen zweiten Trägerabschnitt (10) und einem dritten horizontal verlaufenden Trägerabschnitt (11) besteht.

4. Dreiradkraftwagen nach einem der vorhergehenden Ansprüche,
**dadurch gekennzeichnet,**
**daß** die Antriebseinheit (12) einen abgasarmen Motor aufweist.

5. Dreiradkraftwagen nach einem der vorhergehenden Ansprüche,
**dadurch gekennzeichnet,**
**daß** das Rahmenvorderteil (2) als Rohrrahmen ausgebildet ist.

6. Dreiradkraftwagen nach einem der vorhergehenden Ansprüche,
**dadurch gekennzeichnet,**
**daß** auf dem Rahmenhinterteil (4) ein Zusatztank (18) angeordnet ist.

7. Dreiradkraftwagen nach einem der vorhergehenden Ansprüche,
**dadurch gekennzeichnet,**
**daß** im Rahmenhinterteil (4) ein Kühler (23) nahe dem hinterteilseitigen Ende (13) des Rahmenmittelteils (3) angeordnet ist.

8. Dreiradkraftwagen nach einem der vorhergehenden Ansprüche,
**dadurch gekennzeichnet,**
**daß** der Kühler (23) auf einem Y-Träger (22) der Antriebseinheit (12) angeordnet ist und sich quer zu einer Längsachse (17) des Rahmens (1) erstreckt.

9. Dreiradkraftwagen nach einem der vorhergehenden Ansprüche,
**dadurch gekennzeichnet,**
**daß** in einer Karosserie Lüftungsschlitze zur Kühlung des Kühlers (23) vorgesehen sind.

10. Dreiradkraftwagen nach einem der vorhergehenden Ansprüche,
**dadurch gekennzeichnet,**
**daß** ein Motorschutzbügel (16) vorgesehen ist, welcher an dem rahmenhinterteilseitigen Ende (13) des Rahmenmittelteils (3) befestigt ist.

11. Dreiradkraftwagen nach Anspruch 10,
**dadurch gekennzeichnet,**
**daß** an dem Motorschutzbügel (16) eine Anhängerkupplung (25) angeordnet ist.

12. Dreiradkraftwagen nach einem der vorhergehenden Ansprüche,
**dadurch gekennzeichnet,**
**daß** das Rahmenvorderteil (2) eine Tankattrappe (26) zur Aufnahme von Instrumenten aufweist.

## Claims

1. Three-wheel motor vehicle with a frame (1) consisting of a front frame part (2), a cross-sectionally rectangular central frame part (3) extending horizontally with an end (13) on the rear frame part side, and a rear frame part (4), a drive unit (12) being arranged in the region of the rear frame part (4), and a hollow body formed as a tank for receiving fuel being provided in the central frame part (3), **characterised in that** the central frame part (3) is triangular or trapezoidal in plan view, the tank extending approximately over the total region of the central frame part (3), and the rear frame part (4) having a suspension for the drive unit (12) such that the drive unit (12) with the engine and transmission is arranged between a rear axle (14) and the end (13) on the rear frame part side of the central frame part (3).

2. Three-wheel motor vehide according to claim 1, **characterised in that** the suspension consists of a first horizontally extending carrier section (9) and a second curved carrier section (10) connected thereto, which extends upwardly in a curved manner starting from the first carrier section (9) and ends in a third horizontally extending carrier section (11).

3. Three-wheel motor vehicle according to claim 1, **characterised in that** the suspension consists of a first vertically extending carrier section (9), a second carrier section (10) connected thereto and a third horizontally extending carrier section (11).

4. Three-wheel motor vehicle according to any one of the preceding claims, **characterised in that** the drive unit (12) has a low-emission engine.

5. Three-wheel motor vehicle according to any one of the preceding claims, **characterised in that** the front frame part (2) is formed as a tubular frame.

6. Three-wheel motor vehicle according to any one of the preceding claims, **characterised in that** an additional tank (18) is arranged on the rear frame part (4).

7. Three-wheel motor vehicle according to any one of the preceding claims, **characterised in that** a radiator (23) is arranged in the rear frame part (4) close to the end (13) on the rear part side of the central frame part (3).

8. Three-wheel motor vehicle according to any one of the preceding claims, **characterised in that** the radiator (23) is arranged on a Y-carrier (22) of the drive unit (12) and extends transverse to a longitudinal axis (17) of the frame (1 ).

9. Three-wheel motor vehide according to any one of the preceding claims, **characterised in that** vent slots are provided in a body to cool the radiator (23).

10. Three-wheel motor vehicle according to any one of the preceding claims, **characterised in that** an engine protection bow (16) is provided which is fastened to the end (13) on the rear frame part side of the central frame part (3).

11. Three-wheel motor vehicle according to claim 10, **characterised in that** a trailer hitch (25) is arranged on the engine protection bow (16).

12. Three-wheel motor vehicle according to any one of the preceding claims, **characterised in that** the front frame part (2) has a dummy tank (26) for receiving instruments.

## Revendications

1. Tricycle à moteur, avec un châssis (1) qui est constitué d'une partie avant (2) de châssis, d'une partie centrale (3) de châssis s'étendant horizontalement, de section rectangulaire et ayant une extrémité (13) côté partie arrière de châssis, et d'une partie arrière (4) de châssis, une unité d'entraînement (12) étant disposée dans la région de la partie arrière (4) de châssis et un corps creux étant prévu dans la partie centrale (3) de châssis, corps qui, afin de recevoir du carburant, est conçu comme réservoir,
**caractérisé en ce que** la partie centrale (3) de châssis est triangulaire ou trapézoïdale en vue de dessus, le réservoir s'étendant approximativement sur toute la région de la partie centrale (3) de châssis et la partie arrière (4) de châssis présentant une suspension pour l'unité d'entraînement (12) de telle sorte que l'unité d'entraînement (12), avec le moteur et la transmission, est disposée entre un essieu arrière (14) et l'extrémité (13) côté partie arrière de châssis de la partie centrale (3) de châssis.

2. Tricycle à moteur selon la revendication 1, **caractérisé en ce que** la suspension est constituée d'un premier tronçon porteur (9) s'étendant horizontalement et d'un deuxième tronçon porteur coudé (10), relié au premier, qui s'étend en coude vers le haut depuis le premier tronçon porteur (9) et se termine par un troisième tronçon porteur (11) s'étendant horizontalement.

3. Tricycle à moteur selon la revendication 1, **caractérisé en ce que** la suspension est constituée d'un premier tronçon porteur (9) s'étendant verticalement, d'un deuxième tronçon porteur (10), relié au premier, et d'un troisième tronçon porteur (11) s'étendant horizontalement.

4. Tricycle à moteur selon l'une des revendications précédentes, **caractérisé en ce que** l'unité d'entraînement (12) présente un moteur peu polluant.

5. Tricycle à moteur selon l'une des revendications précédentes, **caractérisé en ce que** la partie avant (2) de châssis est réalisée sous forme de châssis tubulaire.

6. Tricycle à moteur selon l'une des revendications précédentes, **caractérisé en ce qu'**un réservoir auxiliaire (18) est disposé sur la partie arrière (4) de châssis.

7. Tricycle à moteur selon l'une des revendications précédentes, **caractérisé en ce qu'**un radiateur (23) est disposé dans la partie arrière (4) de châssis à proximité de l'extrémité (13) côté partie arrière de la partie centrale (3) de châssis

8. Tricycle à moteur selon l'une des revendications précédentes, **caractérisé en ce que** le radiateur (23) est disposé sur un élément porteur (22) en Y de l'unité d'entraînement (12) et s'étend transversalement à un axe longitudinal (17) du châssis (1).

9. Tricycle à moteur selon l'une des revendications précédentes, **caractérisé en ce que** des fentes d'aération sont prévues dans une carrosserie pour le refroidissement du radiateur (23).

10. Tricycle à moteur selon l'une des revendications précédentes, **caractérisé en ce qu'**un arceau (16) de protection du moteur est prévu, qui est fixé à l'extrémité (13) côté partie arrière de châssis de la partie centrale (3) de châssis.

11. Tricycle à moteur selon la revendication 10, **caractérisé en ce qu'**un attelage de remorque (25) est disposé sur l'arceau (16) de protection du moteur.

12. Tricycle à moteur selon l'une des revendications précédentes, **caractérisé en ce que** la partie avant (2) de châssis présente un faux réservoir (26) destiné à recevoir des instruments.
